# EUROPEAN PATENT SPECIFICATION

(11) **EP 2 841 297 B1**
(45) Date of publication and mention of the grant of the patent: **06.05.2020**
(21) Application number: 13729432.8
(22) Date of filing: 19.04.2013
(51) Int. Cl.: B60L 15/20, B60W 10/00, B60L 50/51, B60L 58/21, B60L 1/00

(54) **CIRCUIT ARRANGEMENT AND A METHOD FOR CONTROLLING AN AC DRIVE SYSTEM OF AN ELECTRIC VEHICLE**
SCHALTUNGSANORDNUNG UND VERFAHREN ZUR STEUERUNG EINES WECHSELSTROM-ANTRIEBSSYSTEMS EINES ELEKTROFAHRZEUGS
CIRCUIT ET PROCÉDÉ POUR COMMANDER UN SYSTÈME D'ENTRAÎNEMENT À COURANT ALTERNATIF D'UN VÉHICULE ÉLECTRIQUE

(30) Priority: 21.04.2012 HU P1200240
(43) Date of publication of application: 04.03.2015
(73) Proprietor: Debreceni Egyetem, 4032 Debrecen (HU)
(72) Inventor: TÓTH, János, H-4034 Debrecen (HU); VITÉZ, Attila, H-4200 Hajdúszoboszló (HU); LIKER, István, H-5510 Dévaványa (HU); HUSI, Géza, H-4032 Debrecen (HU); BARTHA, István, H-4026 Debrecen (HU)
(74) Representative: Harangozo, Gabor
(86) International application number: PCT/IB2013/053115
(87) International publication number: WO 2013/156979

(56) References cited:
- EP-A2- 1 466 774
- JP-A- H07 123 609
- US-A- 5 289 100
- US-A- 5 808 428
- US-A1- 2003 029 654
- US-A1- 2009 146 615

## Description

The invention relates to a circuit arrangement according to the preamble of claim 1 for controlling an alternating current, AC, drive system of an electric vehicle, as well as to a method according to the preamble of claim 16 for controlling an alternating current, AC, drive system of an electric vehicle.

Electric vehicles generally use direct current, DC, motors, the rotational speed of which, and hence the speed of the vehicle, drops with the decrease of the voltage of the power supply (due to battery run-down). Due to their favourable efficiency rate and simple structure, asynchronous alternating current, AC, motors are extensively used in up-to-date hybrid passenger cars and high-performance electric vehicles. Their drawback is that revolution cannot be regulated by traditional means at all; the increase of the voltage and/or the power causes no speed increase, it only raises the delivered torque.

How to regulate the revolution of the electric motor by efficient means and what is the ratio of the effective range and the mass of the batteries: these are basic issues of the development of electric vehicles.

US 2011/0172859 A1 discloses a pulse width modulation (PWM) frequency adaptation mechanism applicable for the drive system of an electric vehicle, wherein control signals to be used in the converter to influence the converter's output signal are produced by the pulse frequency adaptation mechanism from various vehicle parameters - including the control signals provided by the driver of the vehicle. In this solution, the direct current voltage generated by batteries to supply the vehicle is connected to the input of the converter in the traditional way, and the desired output signal is produced by traditional control of the converter.

US 8,020,651 B2 discloses a hybrid motor vehicle and a method for controlling it, wherein the direct current supply of the electric drive system, i.e. the battery unit, is conducted to the voltage input of a heavy-current electric unit, and its output is connected in the usual way to the drivetrain of the vehicle.

US 2009/0243523 A1 discloses a hybrid vehicle drive system, wherein two asynchronous motors are connected to the wheels of the vehicle by mechanical gears and the motors are in connection with the outputs of a control unit, whereas the input of the control unit is in connection with a battery pack providing for the power supply of the vehicle. The document indicates as technical shortcoming the existence and the uncertain or in some cases faulty operation of this coupling unit, and proposes as its object to eliminate this error and/or any overvoltage that may occur as a result of this error in recharging mode.

US 20090146615 A1 discloses a method for controlling an operation of a motor vehicle equipped with a hybrid drive unit, which comprises a combustion engine, a power electronics, i.e., inverter means and at least one electric machine that can be selectively operated as a motor or as a generator. The electric machine, when in generator mode, charges a battery and/or supplies power to a vehicle electrical system of the motor vehicle. The invention provides that in generator mode the electric machine is operated in alternating intervals, while maintaining predefined boundary conditions,this largely prevents the electric machine from approaching operating points under light load which have a low efficiency and achieves a fuel advantage in comparison to a continuous operating mode. The document does not show any unusual way for supplying energy.

JPH 07123609 A relates to a fuel cell power feeding system having a fuel cell constituting the main powering means of a vehicle, a first power converter, a back-up chargeable battery, a back-up second power converter which operates to control the charge and discharge of the back-up battery. To lessen loss and to make the efficiency of power conversion higher by shortening an on-period to the second back-up power converter, and to lessen loss in the snubber circuit of a load-side first power converter, the output of the second power converter is connected to the input of the first power converter through a smoothing reactor. The control circuit of the second power converter receives the output current of the second power converter, the input current of the first power converter and the output voltage of the back-up battery as inputs, and on the basis of these, the second power converter is controlled to charge or discharge the back-up battery. Consequently, the output current of the fuel cell and the output current of the second power converter supply the input current of the first power converter. The document shows a common way for supplying energy.

US 2003029654 A1 shows a power supply apparatus for a vehicle, wherein an AC-DC inverter circuit inputs a voltage from a first battery unit through switches. A smoothing condenser is provided between the first battery unit and the input of the inverter circuit in parallel. A DC-DC converter is provided between the smoothing condenser and a second battery unit to voltage-convert electric energy stored in the first battery unit or the smoothing condenser to supply to the second battery unit, and to voltage-convert electric energy stored in the second battery unit to supply to the smoothing condenser. An electronic control unit controls the DC-DC converter before starting power supply to the inverter circuit, such that the switches are closed after the smoothing condenser is charged to a voltage within a predetermined permission voltage range from the voltage of the first battery unit.

US 5,289,100 discloses a propulsion system for using a pair of electric induction motors to power a pair of vehicle drive wheels, where the motors are driven by pulses of electric current from a common DC bus. The inductance of stator windings cause electric current to power the motors during the time between pulses so power from the DC bus is low and not usable for driving the vehicle.

EP 1466774 A2 discloses a drive apparatus for a hybrid 4WD vehicle basically comprising an internal combustion engine, generator means, a 4WD control unit, a battery, an inverter unit and several electric motors. The drive apparatus controls the operation of the electric motors associated with the wheels to achieve a lightweight and efficient drive apparatus for a hybrid vehicle.

US 5,808,428 discloses a control system for an electric vehicle, dealing with the problem of dropping of the voltage of a main battery below a threshold value, which causes decrease of the driving force of a motor. Using a separate battery monitor block and motor control block a deep discharging of the battery will be prevented, while minimizing the influence on the traveling of the vehicle.

Based on the current state of the art, no drive control exists for the AC drive of electric vehicles that could co-operate with the electric and/or electronic control means being manufactured in large series and hence cheaply available to date without requiring their transformation, and/or necessitating operation close to their respective threshold values; hence the development and implementation of the various drives demands significant intellectual and financial inputs.

To our best knowledge this demand has remained unsatisfied to this day; therefore, our object is to create a circuit arrangement and a method suitable for controlling the AC drive of an electric vehicle in a simple and reliable way, at low cost.

An asynchronous AC motor, supported by a frequency converter, has a much more favourable characteristic curve than the DC motors. In practice, this means that, at high starting torque, the torque associated with the characteristic curve modified by the frequency converter is constant up to the rotational speed associated with the breakdown torque, that is, the maximum torque is available also at higher revolutions and speeds, in contrast with the DC engines.

The novelty of our circuit arrangement and method lies in the way we apply a preprogrammed frequency converter that is not used for this purpose, albeit it is well-known in industry. Notably, instead of using the normal AC input of the frequency converter for supplying energy, the direct current voltage is supplied to the so-called intermediate circuitry by generating alternating voltage of a frequency that can be used directly for driving the vehicle from DC on the input side, by a programmable converter.

Based on the recognition outlined above, the task has been solved on the one hand via a circuit arrangement comprising the features of claim 1 for controlling an alternating current, AC, drive system of an electric vehicle, and on the other hand via a method comprising the features of claim 17 for controlling an alternating current, AC, drive system of an electric vehicle.

Preferred embodiments of the invention are listed in the dependent claims.

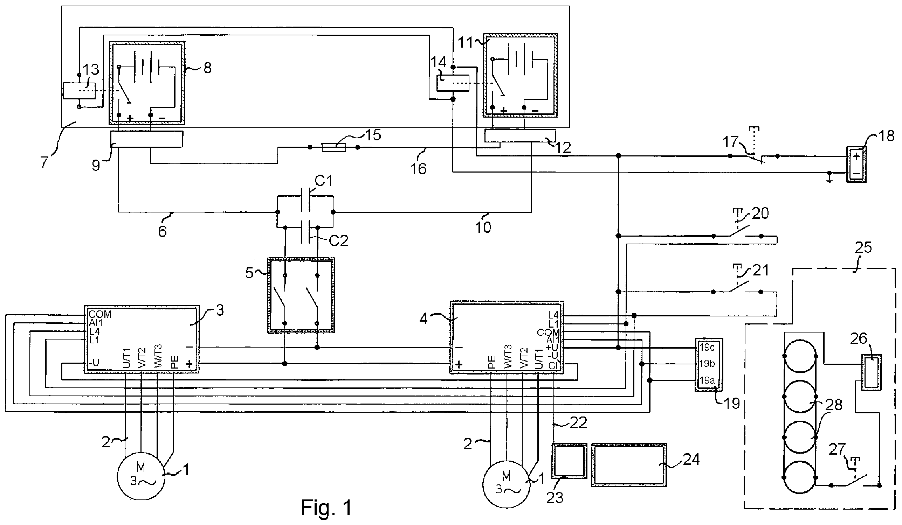

The invention will be described in more detail with reference to the attached drawing showing an exemplary implementation of the proposed method and the proposed circuit arrangement. In the drawing, Figure 1 shows the block diagram of a preferred embodiment of the proposed circuit arrangement.

The block diagram shown in the drawing exemplifies but one possible and preferred embodiment of the circuit arrangement according to the invention, but as will be obvious to persons skilled in the art that its individual components, functional units and blocks can also be replaced by components and blocks suitable for solving the task, available commercially and/or being well-known.

The electric drive system according to the invention concerns a DC drive regulated by a heavy-current microcomputer-based frequency converter, more precisely a power electronic circuit arrangement that regulates the forced frequency of the AC drive motor.

The figure shows exclusively the electrical circuit diagram; to facilitate understanding, the vehicle and the affected vehicle parts are omitted from the figure partly because they are well-known and partly for the sake of simplicity. As recently is frequent with the electric drives related to vehicles, the vehicle is driven in the present case, too, by drive motors 1 directly connected on an appropriate bogie or running gear to a wheel of a vehicle. In the case shown here, two drive motors 1 are used which are meant to drive the rear wheels of a vehicle. A person skilled in the art will be able to figure out and understand that drive motors 1 can be designed not as separate and self-standing motors, but they can be designed also in other known ways, e.g. realised as wheel hub motors, provided that the drive motors 1 can be designed in a way considering also the related, decisively mechanical and thermal criteria. According to a further option, it is possible to use only one single drive motor 1, also associated in the known way to some mechanical gear with at least one wheel of the vehicle. In line with the old traditional drives, drive motor 1 may also drive a cardan shaft, and the cardan shaft may provide for the drive of the rear wheels of the vehicle through a compensating gear.

The power of the six-pole asynchronous drive motors 1 used in the example shown here is: 2^{∗}4 kW.

The drive motor 1 is connected through lines 2 that are of appropriate cross-section, a cross-section of at least 2.5 mm², to outputs U/T1, V/T2, W/T3 of a frequency converter unit 3. Since in the example shown here the two rear wheels of the vehicle are driven separately, two drive motors 1 are used, and hence drive motors 1 are connected to the appropriate U/T1, V/T2, W/T3 outputs of the two frequency converter units 3, 4. The +, - terminals of the frequency converter units 3, 4 are connected to each other and they are conducted to corresponding terminals of a bipolar thermal circuit breaker applied as switching unit 5. Filter capacitors C1, C2 are connected in between the other poles of the bipolar circuit breaker, and one pole of the circuit breaker is connected via line 6 to the positive terminal of one battery pack 8 of the battery unit 7 marked with thin line through a connector 9, whereas the other pole of the circuit breaker is connected via line 10 to the negative terminal of the other battery pack 11 of the battery unit 7 through a connector 12. Battery packs 8, 11 comprise battery cells indicated in the figure symbolically only for the sake of simplicity. In each of the battery packs 8, 11 the battery cells are connected to the respective other terminals of the battery packs 8, 11 through the contacts of the relays 13, 14 that are open in default setting, and the positive terminal of the battery pack 11 is conducted to the negative terminal of the battery pack 8 through the connector 12 and in the present example also through a 40A fuse 15 via line 16 through the connector 9, that is, the battery unit 7 comprises two serially connected battery packs 8, 11. Relays 13, 14 may be placed within the battery packs 8, 11, but may be placed also externally.

In the present case, each of the battery packs 8, 11 comprises 216 battery cells, each of a nominal voltage of 4.2 V and a capacity of 7.5 Ah, arranged in serial/parallel connection in a way that is understandable and known to a person skilled in the art and that produces a nominal voltage of 152 V measurable at the terminals of each of the battery packs 8, 11, so that each of the battery packs 8, 11 has a capacity of 45 Ah. Since the battery packs 8, 11 are connected serially, all in all a battery unit 7 of nominal voltage of 304 V and of nominal capacity of 54 Ah will be available for driving the vehicle.

The relays 13, 14 assigned to the respective battery packs 8, 11 are parallel connected with one another, and are connected directly to the auxiliary battery 18 through an emergency shut-down switch 17 that is closed in default position. The emergency shut-down switch 17 may be an usual mechanical switch 17, preferably arranged within easy reach of the driver of the vehicle, but additionally or alternatively the switch 17 may also be an impact-sensitive switch to be released and hence open the circuit of the relays 13, 14 under the effect of the vehicle being hit.

Terminals +U, -U, COM, AI1 of the frequency converter unit 3 are connected to the terminals +U, -U, COM, AI1 of the frequency converter unit 4. The terminals COM and AI1 of the frequency converter unit 3 are also connected to the terminals 19a, 19b of a control unit 19, and a further terminal 19c of the control unit 19 is connected to the positive terminal of the auxiliary battery 18, together with the terminal +U of the frequency converter unit 4. As will be understood by a person skilled in the art, the negative pole of the auxiliary battery 18 used in this embodiment is connected to the metallic body of the vehicle, that is, it can be regarded as body potential, and it is the positive terminal of the auxiliary battery 18 that represents the supply voltage for the various units connected to it. In the example shown here, the auxiliary battery 18 is a sealed gel battery of a nominal voltage of 24 V and a capacity of 7 Ah, arranged in the vehicle that is not shown in the drawing in a fixed, but easily accessible and replaceable manner, similarly to the battery packs 8, 11 of the battery unit 7.

In the example shown here, the control unit 19 is essentially a potentiometer, in regard of which the decisive requirements set in this embodiment are also that it should provide for the presence of the control signal necessary for the frequency converter unit 4 in a reliable way, without interruption and for a long time. This can be solved in the way known in the field e.g. through the mechanical and electrical interconnection of even several potentiometers.

If that potentiometer was to regulate the frequency alone, the resulting vehicle would be difficult to drive as the drive motors 1 would then try to attain the rotational speed determined by the frequency, at the highest power consumption. This is unfavourable, because then the vehicle driver could exert no influence on the torque and hence on acceleration, that is, the vehicle would try to attain the speed determined by the driver at the highest possible acceleration rate. Therefore, the frequency converter units 3, 4 include also real-time torque limiting function based on the rotational speed and the position of the potentiometer. At full throttle, at higher rotational speed, this no longer limits the delivered power, so it is possible to attain the desired running dynamic properties.

According to a further preferred embodiment, the radius of the curve followed by the wheels of the vehicle can be calculated with the help of an angular position signal transmitter associated with the steering wheel of the vehicle, and that is how the revolution difference of the wheels is given. It is possible to create that way what is essentially an electronically-controlled compensation gear. An inductive signal transmitter is applied to set the incremental angular position signal transmitter being used to a value of zero, and the signal transmitter is set to a value of zero continuously whenever the steering wheel is in its neutral mid-gear position.

One terminal of each of two further switches 20, 21, open in default case, is connected to the positive terminal of the auxiliary battery 18. In the example being shown here, the switch 20 is a key main switch, the other terminal of which is led to control inputs L1 of the frequency converter units 3 and 4, whereas the switch 21 is a switch 21 operated and applied as an electric brake, the other terminal of which is connected to control inputs L4 of the frequency converter units 3 and 4.

The display 24, in the present case a touchscreen display 24, through which the parameters of the frequency converter units 3, 4 can be set and/or programmed, is connected to the AO1 and COM connectors of the frequency converter unit 4 by a communication cable 22 commonly used in this art, through an encoder 23.

In the example shown here, the frequency converter units 3, 4 operate in master-slave mode, with the frequency converter unit 3 operating in master and the frequency converter unit 4 in slave mode; the modes concerned are well-known in this field of expertise and they are easy to be set in the manner that can be understood from the data sheets of the frequency converter units 3, 4.

In the embodiments shown here, the frequency converter units 3, 4 are frequency converters of type Altivar ATV71HU55M3 of Schneider Electric, expanded by an encoder and a *control inside* card, and their structure, operation, programming, threshold values etc. can be understood in detail by persons skilled in the art from the manufacturer's data sheet.

The figure indicates symbolically, in dashed line, also a cooling unit 25 designed to cool the drive motors 1 used to drive the vehicle or, as the case may be, the battery unit 7 and the frequency converter units 3, 4. The cooling unit 25 is to function while the vehicle is in operation, in movement, but also after it is stopped, in order to prevent the detrimental overheating of certain parts/units. Therefore, the cooling unit 25 has its own auxiliary battery 26, independent of the other power supply units, connected through the thermoswitch 27, which is open in default case, to DC fans 28. According to our calculations and experiments, the auxiliary battery 26 may be a battery with a nominal voltage of 16 V and a capacity of 7 Ah, and even commercially available DC brushless fans may be used as fan 28.

One of the major advantages of the circuit arrangement and method according to the invention, most important from the point of view of the running dynamics of the vehicle is that the torque of the motor is the maximum exactly in the higher rotational speed range, in contrast with the DC motors, and the revolution of the drive (the speed of the vehicle) will not decrease until the voltage of the battery unit 7 drops below a certain pre-set level. In that case, by a software-based adjusting of the frequency converter unit(s), the vehicle can move on to the place where it is recharged. The size of this safety energy reserve depends on the parameter of the battery unit and can also be set from the software.

According to our experiments conducted under normal road traffic conditions, the effective range of the vehicle supplemented with the circuit arrangement according to the invention exceeds 110 km, and its ultimate speed is 80-100 km/h depending on the settings. It is typical of its acceleration that it can increase its speed by 1km/h per meter up to almost its ultimate speed.

### List of reference signs

- 1: drive motor
- 2: line
- 3, 4: frequency converter
- +, -: terminal
- U/T1, V/T2, W/T3: output
- +U, -U, COM, AI1: terminal
- L1: control input
- L4: control input
- 5: switching unit
- C1, C2: filter capacitor
- 6: line
- 7: battery unit
- 8: battery pack
- 9: connector
- 10: line
- 11: battery pack
- 12: connector
- 13, 14: relay
- 15: fuse
- 16: line
- 17: switch
- 18: auxiliary battery
- 19: control unit
- 19a, 19b, 19c: terminal
- 20,21: switch
- 22: cable
- 23: encoder
- 24: display
- 25: cooling unit
- 26: auxiliary battery
- 27: thermo switch
- 28: fan

## Claims

1. Circuit arrangement for controlling an alternating current, AC, drive system of an electric vehicle,
said vehicle comprising
- at least one asynchronous drive motor (1) associated with at least one wheel of the vehicle,
- at least one frequency converter unit (3) having at least one AC heavy-current input and at least one AC heavy-current output (U/T1, V/T2, W/T3), the at least one AC heavy-current output (U/T1, V/T2, W/T3) is in connection with the at least one asynchronous drive motor (1),
- a battery unit (7) supplying current consumers of the vehicle, including the at least one frequency converter unit (3),
- a control unit (19) connected to the at least one frequency converter unit (3), **characterised in that**
- a direct current output of the battery unit (7) is connected through a switching unit (5) to terminals (+, -) dedicated for an external DC choke of the at least one frequency converter unit (3, 4).
- the at least one frequency converter unit (3, 4) comprises a frequency converter of type ATV71HU55M3,
- shut-down relays (13, 14) are associated with the battery packs (8, 11), each shut-down relay (13, 14) is connected between one of the electric output terminals of the battery pack (8, 11) and the terminal of a battery cell included therein, and
- the actuating coil of the relay (13, 14) is connected to an auxiliary battery (18) through an emergency switch (17).

2. The circuit arrangement according to claim 1, ***characterised in that it*** comprises a battery charging unit connected to the battery unit (7).

3. The circuit arrangement according to any of claims 1 or 2, ***characterised in that*** the battery unit (7) is assembled from two battery packs (8, 11) connected electrically serially.

4. The circuit arrangement according to claim 3, ***characterised in that*** each battery pack (8, 11) is a battery pack of a nominal voltage of 152 V and a capacity of 45 Ah.

5. The circuit arrangement according to claim 4, ***characterised in that*** the battery pack (8, 11) is built of lithium-polymer cells.

6. The circuit arrangement according to any of claims 3 to 5, ***characterised in that*** each battery pack (8, 11) comprises 216 battery cells of a nominal voltage of 4.2 V and a capacity of 7.5 Ah.

7. The circuit arrangement according to any of claims 1 to 6, ***characterised in that*** the emergency switch (17) is a manually operated switch.

8. The circuit arrangement according to claim 7, ***characterised in that*** the emergency switch (17) is an impact-sensitive switch.

9. The circuit arrangement according to claim 2, ***characterised in that*** the battery charging unit is provided with a standardised input connector.

10. The circuit arrangement according to any of claims 1 to 9, ***characterised in that*** the asynchronous drive motor (1) is directly associated with a vehicle wheel.

11. The circuit arrangement according to any of claims 1 to 10, ***characterised in that*** the asynchronous drive motor (1) is associated with one vehicle wheel through a mechanical gear.

12. The circuit arrangement according to any of claims 1 to 11, ***characterised in that*** it comprises two frequency converter units (3, 4) associated directly with drive motors (1) connected to one vehicle wheel each, and the two frequency converter units (3, 4) are interconnected in master-slave mode.

13. The circuit arrangement according to any of claims 1 to 12, ***characterised in that*** the control unit (19) electrically connected to the frequency converter units (3, 4) comprises a potentiometer for controlling the acceleration and deceleration of the vehicle.

14. The circuit arrangement according to any of claims 1 to 13, ***characterised in that*** the control unit (19) electrically connected to the frequency converter units (3, 4) comprises a switch causing the vehicle to decelerate.

15. The circuit arrangement according to any of claims 1 to 14, ***characterised in that*** it comprises a cooling fan (28) associated with the drive motor (1).

16. The circuit arrangement according to claim 15, ***characterised in that*** the cooling fan (28) is connected via a thermoswitch (27) to the auxiliary battery (26).

17. A method for controlling an alternating current, AC, drive system of an electric vehicle, comprising the steps of
generating alternating current from a direct current supply voltage by a frequency converter unit (3, 4) having at least one AC heavy-current input and at least one AC heavy-current (U/T1, V/T2, W/T3) output,
supplying at least one asynchronous drive motor (1) associated with at least one wheel of the vehicle with the generated alternating current, **characterised in** further comprising the step of supplying the frequency converter units (3, 4) with direct current through terminals (+, -) of the frequency converter units (3, 4) dedicated for connecting a damping DC choke.
- using a frequency converter of type ATV71HU55M3 as the frequency converter unit (3, 4), and
- providing electric connection between one of the electric output terminals of the battery pack (8, 11) and the terminal of a battery cell included therein via shut-down relays (13, 14), and
- powering said shut-down relays (13, 14) by an auxiliary battery (18) through an emergency switch (17).

18. The method according to claim 17, ***characterised by*** setting the magnitude of the alternating current being generated via the exciting frequency of the frequency converter units (3, 4).

19. The method according to claim 18, ***characterised by*** setting the exciting frequency of the frequency converter units (3, 4) via a potentiometer of a control unit (19) for controlling the acceleration and deceleration of the vehicle that is in electrical connection with the frequency converter unit (3, 4).

20. The method according to any of claims 17 to 19, ***characterised by*** continuously measuring the rotational speed of the drive motor (1), and in addition applying torque limitation based on the rotational speed and potentiometer position readings ever by setting the exciting frequency of the frequency converter unit (3, 4).

21. The method according to claim 20, ***characterised by*** continuously changing torque limiting based on the rotational speed and potentiometer position readings ever.

22. The method according to any of claims 17 to 21, ***characterised by*** determining the difference between the revolutions of the right-hand and left-hand steered wheels and adjusting the rotational speed of the drive motors (1) assigned to the respective wheels according to the determined difference.

23. The method according to Claim 22, ***characterised by*** measuring the revolutions of the respective wheels by inductive angular position signal transmitters.

24. The method according to Claim 23, ***characterised by*** setting the output signal of the angular position signal transmitters to default position when the steering wheel of the vehicle is in neutral mid-gear position.

25. The method according to any of Claims 17 to 24, ***characterised by*** the drive motor (1) is cooled in function of its temperature by a cooling fan (29) supplied by a supply unit that is independent of the direct current power supply unit supplying the drive motor (1).

26. The method according to any of Claims 17 to 25, ***characterised by*** connecting the direct current power supply to the terminals of the frequency converter unit (3, 4) via an impact-sensitive switch assigned to the vehicle.

27. The method according to any of Claims 17 to 26, ***characterised by*** connecting the direct current power supply to the terminals of the frequency converter unit (3, 4) via a thermoswitch applied as switching unit (5).

## Patentansprüche

1. Schaltungsanordnung zum Steuern eines Wechselstrom-, AC, Antriebssystems eines Elektrofahrzeugs,
wobei das Fahrzeug umfasst
- mindestens einen asynchronen Antriebsmotor (1), der mindestens einem Rad des Fahrzeugs zugeordnet ist,
- mindestens eine Frequenzumrichtereinheit (3) mit mindestens einem Wechselstrom-Hochstromeingang und mindestens einem Wechselstrom-Hochstromausgang (U/T1, V/T2, W/T3), wobei der mindestens ein Wechselstrom-Hochstromausgang (U/T1, V/T2, W/T3) mit dem mindestens einen asynchronen Antriebsmotor (1) in Verbindung steht,
- eine Batterieeinheit (7), die die Stromverbraucher des Fahrzeugs, einschließlich die mindestens eine Frequenzumrichtereinheit (3), versorgt;
- eine Steuereinheit (19), die mit der mindestens einen Frequenzumrichtereinheit (3) verbunden ist,
***dadurch gekennzeichnet, dass***
- ein Gleichstromausgang der Batterieeinheit (7) über eine Schalteinheit (5) mit jenen Klemmen (+, -) der mindestens einen Frequenzumrichtereinheit (3, 4) verbunden ist, die für eine externe Gleichstromdrossel vorgesehen sind,
- die mindestens eine Frequenzumrichtereinheit (3, 4) einen Frequenzumrichter vom Typ ATV71HU55M3 umfasst,
- Abschaltrelais (13, 14) zu Batteriepacks (8, 11) zugeordnet sind, wobei jedes Abschaltrelais (13, 14) zwischen einer der elektrischen Ausgangsklemmen des Batteriepacks (8, 11) und der Klemme einer darin enthaltenen Batteriezelle angeschlossen ist, und
- die Erregerspule des Relais (13, 14) über einen Notschalter (17) an einer Hilfsbatterie (18) angeschlossen ist.

2. Schaltungsanordnung nach Anspruch 1, ***dadurch gekennzeichnet,* dass** sie eine mit der Batterieeinheit (7) verbundene Batterieladeeinheit umfasst.

3. Schaltungsanordnung nach einem der Ansprüche 1 oder 2, ***dadurch gekennzeichnet,* dass** die Batterieeinheit (7) aus zwei Batteriepacks (8, 11) zusammengebaut ist, die elektrisch seriell verbunden sind.

4. Schaltungsanordnung nach Anspruch 3, ***dadurch gekennzeichnet,* dass** jeder Batteriepack (8, 11) ein Batteriepack mit einer Nennspannung von 152 V und einer Kapazität von 45 Ah ist.

5. Schaltungsanordnung nach Anspruch 4, ***dadurch gekennzeichnet,* dass** der Batteriepack (8, 11) aus Lithium-Polymer-Zellen aufgebaut ist.

6. Schaltungsanordnung nach einem der Ansprüche 3 bis 5, ***dadurch gekennzeichnet,* dass** jedes Batteriepack (8, 11) 216 Batteriezellen mit einer Nennspannung von 4,2 V und einer Kapazität von 7,5 Ah umfasst.

7. Schaltungsanordnung nach einem der Ansprüche 1 bis 6, ***dadurch gekennzeichnet,* dass** der Notschalter (17) ein manuell betätigter Schalter ist.

8. Schaltungsanordnung nach Anspruch 7, **dadurch *gekennzeichnet,* dass** der Notschalter (17) ein stoßempfindlicher Schalter ist.

9. Schaltungsanordnung nach Anspruch 2, ***dadurch gekennzeichnet,* dass** die Batterieladeeinheit mit einem standardisierten Eingangsstecker versehen ist.

10. Schaltungsanordnung nach einem der Ansprüche 1 bis 9, ***dadurch gekennzeichnet,* dass** der asynchrone Antriebsmotor (1) unmittelbar einem Fahrzeugrad zugeordnet ist.

11. Schaltungsanordnung nach einem der Ansprüche 1 bis 10, ***dadurch gekennzeichnet,* dass** der asynchrone Antriebsmotor (1) über eine mechanische Übersetzung einem Fahrzeugrad zugeordnet ist.

12. Schaltungsanordnung nach einem der Ansprüche 1 bis 11, ***dadurch gekennzeichnet,* dass** sie zwei Frequenzumrichtereinheiten (3, 4) umfasst, die unmittelbar mit Antriebsmotoren (1) verbunden sind, die jeweils mit einem Fahrzeugrad verbunden sind, und die zwei Frequenzumrichtereinheiten (3, 4) im Master-Slave-Modus miteinander in Verbindung stehen.

13. Schaltungsanordnung nach einem der Ansprüche 1 bis 12, ***dadurch gekennzeichnet,* dass** die Steuereinheit (19), die elektrisch mit den Frequenzumrichtereinheiten (3, 4) verbunden ist, ein Potentiometer zum Steuern der Beschleunigung und Abbremsung des Fahrzeugs umfasst.

14. Schaltungsanordnung nach einem der Ansprüche 1 bis 13, **dadurch gekennzeichnet, dass** die Steuereinheit (19), die elektrisch mit den Frequenzumrichtereinheiten (3, 4) verbunden ist, einen Schalter umfasst, der das Fahrzeug zum Abbremsen bringt.

15. Schaltungsanordnung nach einem der Ansprüche 1 bis 14, ***dadurch gekennzeichnet,* dass** sie einen dem Antriebsmotor (1) zugeordneten Kühlgebläse (28) umfasst.

16. Schaltungsanordnung nach Anspruch 15, ***dadurch gekennzeichnet,* dass** der Lüfter (28) über einen Thermoschalter (27) mit einer Hilfsbatterie (26) verbunden ist.

17. Verfahren zum Steuern eines Wechselstrom-, AC, Antriebssystems eines Elektrofahrzeugs, umfassend die Schritte von
Erzeugen von Wechselstrom aus einer Gleichstromversorgungsspannung mittels einer Frequenzumrichtereinheit (3, 4) die über mindestens einen Wechselstrom-Hochstromeingang und mindestens einen Wechselstrom-Hochstromausgang (U/T1, V/T2, W/T3) verfügt,
Speisen mindestens eines asynchronen Antriebsmotors (1), der mindestens einem Rad des Fahrzeugs zugeordnet ist, mit dem erzeugten Wechselstrom, ***gekennzeichnet durch*** weitere Schritte von
- Versorgen der Frequenzumrichtereinheiten (3, 4) mit Gleichstrom über Klemmen (+, -) der Frequenzumrichtereinheiten (3, 4), die für den Anschluss einer externen Gleichstromdrossel, DC, vorgesehen sind;
- Verwenden eines Frequenzumrichters vom Typ ATV71HU55M3 als Frequenzumrichtereinheit (3, 4) und
- Bereitstellen einer elektrischen Verbindung zwischen einer der elektrischen Ausgangsklemmen des Batteriepacks (8, 11) und der Klemme einer darin enthaltenen Batteriezelle über Abschaltrelais (13, 14), und
- Versorgen der Abschaltrelais (13, 14) **durch** eine Hilfsbatterie (18) über einen Notschalter (17).

18. Verfahren nach Anspruch 17, ***gekennzeichnet durch*** Einstellen der Größe des erzeugten Wechselstroms mittels der Erregerfrequenz der Frequenzumrichtereinheiten (3, 4).

19. Verfahren nach Anspruch 18, ***gekennzeichnet durch*** Einstellen der Erregerfrequenz der Frequenzumrichtereinheiten (3, 4) mittels eines Potentiometers einer Steuereinheit (19) für die Steuerung der Beschleunigung und Abbremsung des Fahrzeugs, das mit der Frequenzumrichtereinheit (3, 4) in elektrischer Verbindung steht.

20. Verfahren nach einem der Ansprüche 17 bis 19, ***gekennzeichnet durch*** kontinuierliches Erfassen der Drehzahl des Antriebsmotors (1) und zusätzliches Anwenden einer Drehmomentbegrenzung basierend auf aktuellen Drehzahl- und Potentiometerpositionsablesungen **durch** Einstellen der Erregerfrequenz der Frequenzumrichtereinheit (3, 4).

21. Verfahren nach Anspruch 20, ***gekennzeichnet durch*** eine sich ständig ändernde Drehmomentbegrenzung basierend auf den aktuellen erfassten Drehzahl- und Potentiometerpositionswerten.

22. Verfahren nach einem der Ansprüche 17 bis 21, ***gekennzeichnet durch*** Bestimmen der Differenz zwischen den Umdrehungen der rechten und linken gelenkten Räder und Einstellen der Drehzahl der Antriebsmotoren (1), die den jeweiligen Rädern gemäß zugeordnet sind, basierend auf dem ermittelten Unterschied.

23. Verfahren nach Anspruch 22, ***gekennzeichnet durch*** Erfassen der Umdrehungen der jeweiligen Räder **durch** induktive Winkelpositionssignalgeber.

24. Verfahren nach Anspruch 23, ***gekennzeichnet durch*** Einstellen des Ausgangssignals der Winkelpositionssignalgeber auf eine Ausgangsposition, wenn sich das Lenkrad des Fahrzeugs in einer neutralen Mittelstellung befindet.

25. Verfahren nach einem der Ansprüche 17 bis 24, ***gekennzeichnet durch*** Kühlen des Antriebsmotors (1) in Abhängigkeit von dessen Temperatur mittels einem Lüfter (29), der von einer Stromversorgungseinheit gespeist ist, die von der Gleichstromversorgungseinheit, die den Antriebsmotors (1) speist, unabhängig ist.

26. Verfahren nach einem der Ansprüche 17 bis 25, ***gekennzeichnet durch*** Verbinden der Gleichstromversorgung mit den Klemmen der Frequenzumrichtereinheit (3, 4) über einen dem Fahrzeug zugewiesenen stoßempfindlichen Schalter.

27. Verfahren nach einem der Ansprüche 17 bis 26, ***gekennzeichnet durch*** Verbinden der Gleichstromversorgung mit den Klemmen der Frequenzumrichtereinheit (3, 4) über einen als eine Schalteinheit (5) eingesetzte Thermoschalter.

## Revendications

1. Arrangement du circuit pour commander un système de courant alternatif, CA, d'entraînement d'un véhicule électrique,
ledit véhicule comprenant
- au moins un moteur d'entraînement asynchrone (1) associé à au moins une roue du véhicule,
- au moins un convertisseur de fréquence (3) avec a au moins une entrée à courant alternatif à courant élevé et au moins une sortie à courant alternatif à courant élevé (U / T1, V / T2, W / T3), l'au moins une sortie à courant alternatif à courant élevé (U/T1, V/T2, W/T3) étant connectée à l'au moins un moteur d'entraînement asynchrone (1),
- une unité de batterie (7), alimentant les consommateurs d'électricité du véhicule, y compris le au moins un convertisseur de fréquence (3),
- une unité de commande (19) connectée à l'au moins un convertisseur de fréquence (3),
***caractérisé en ce que***
- une sortie de courant continu de l'unité de batterie (7) est connectée via une unité de commutation (5) aux bornes (+, -) dédiées à une inductance CC externe de l'au moins un convertisseur de fréquence (3, 4),
- l'au moins un convertisseur de fréquence (3, 4) comprend un convertisseur de fréquence du type ATV71HU55M3,
- des relais de coupure (13, 14) sont affectés à des blocs de batteries (8, 11), chaque relais de coupure (13, 14) étant connecté entre l'une des bornes de sortie électrique du bloc de batteries (8, 11) et la borne d'une cellule de batterie qui y est contenue, et
- la bobine d'excitation du relais (13, 14) est reliée à une batterie auxiliaire (18) via un interrupteur d'urgence (17)

2. Arrangement du circuit selon la revendication 1, ***caractérisé en ce qu'***il comprend une unité de charge de batterie connectée à l'unité de batterie (7).

3. Arrangement du circuit selon l'une quelconque des revendications 1 ou 2, ***caractérisé en ce que*** l'unité de batterie (7) est assemblée à partir de deux blocs de batterie (8, 11) connectés électriquement en série.

4. Arrangement du circuit selon la revendication 3, ***caractérisé en ce que*** chaque bloc de batterie (8, 11) est un bloc de batterie d'une tension nominale de 152 V et d'une capacité de 45 Ah.

5. Arrangement du circuit selon la revendication 4, ***caractérisé en ce que*** le bloc de batteries (8, 11) est constitué de cellules lithium-polymère.

6. Arrangement du circuit selon l'une quelconque des revendications 3 à 5, ***caractérisé en ce que*** chaque bloc de batterie (8, 11) comprend 216 cellules de batterie d'une tension nominale de 4,2 V et d'une capacité de 7,5 Ah.

7. Arrangement du circuit selon l'une quelconque des revendications 1 à 6, ***caractérisé en ce que*** l'interrupteur d'urgence (17) est un interrupteur à commande manuelle.

8. Arrangement du circuit selon la revendication 7, ***caractérisé en ce que*** l'interrupteur d'urgence (17) est un interrupteur sensible aux chocs.

9. Arrangement du circuit selon la revendication 2, ***caractérisé en ce que*** l'unité de charge de batterie est pourvue d'un connecteur d'entrée normalisé.

10. Arrangement du circuit selon l'une des revendications 1 à 9, ***caractérisé en ce que*** le moteur d'entraînement asynchrone (1) est directement associé à une roue de véhicule.

11. Arrangement du circuit selon l'une quelconque des revendications 1 à 10, ***caractérisé en ce que*** le moteur d'entraînement asynchrone (1) est associé à une roue de véhicule par l'intermédiaire d'un engrenage mécanique.

12. Arrangement du circuit selon l'une quelconque des revendications 1 à 11, ***caractérisé en ce qu'*il** comprend deux unités de convertisseur de fréquence (3, 4) associées directement à des moteurs d'entraînement (1) reliés chacun à une roue de véhicule, et les deux unités de convertisseur de fréquence (3, 4) sont interconnectés en mode maître-esclave.

13. Arrangement du circuit selon l'une quelconque des revendications 1 à 12, ***caractérisé en ce que*** l'unité de commande (19) connectée électriquement aux unités de convertisseur de fréquence (3, 4) comprend un potentiomètre pour contrôler l'accélération et la décélération du véhicule.

14. Arrangement du circuit selon l'une quelconque des revendications 1 à 13, ***caractérisé en ce que*** l'unité de commande (19) connectée électriquement aux unités de convertisseur de fréquence (3, 4) comprend un interrupteur entraînant une décélération du véhicule.

15. Arrangement du circuit selon l'une quelconque des revendications 1 à 14, ***caractérisé en ce qu'***il comprend un ventilateur de refroidissement (28) associé au moteur d'entraînement (1).

16. Circuit selon la revendication 15, ***caractérisé en ce que*** le ventilateur de refroidissement (28) est connecté via un thermorupteur (27) à la batterie auxiliaire (26).

17. Procédé de commande d'un système d'entraînement à courant alternatif, CA, d'un véhicule électrique, comprenant les étapes de
génération d'un courant alternatif à partir d'une tension d'alimentation en courant continu au moyen d'un convertisseur de fréquence (3, 4) qui a au moins une entrée à courant alternatif à courant élevé et au moins une sortie à courant alternatif à courant élevé (U/T1, V/T2, W/T3),
alimentation d'au moins un moteur d'entraînement asynchrone (1), qui est affecté à au moins une roue du véhicule, avec le courant alternatif généré, ***caractérisé par*** d'autres étapes de
- alimenter les unités de convertisseur de fréquence (3, 4) en courant continu via les bornes (+, -) des unités de convertisseur de fréquence (3, 4) qui sont prévues pour connecter une inductance de courant continu externe, DC;
- utilisez un convertisseur de fréquence de type ATV71HU55M3 comme unité de convertisseur de fréquence (3, 4) et
- établir une connexion électrique entre l'une des connexions de sortie électrique du bloc de batterie (8, 11) et la connexion d'une cellule de batterie qui y est contenue via des relais d'isolement (13, 14), et
- alimenter les relais d'arrêt (13, 14) par une batterie auxiliaire (18) via un interrupteur d'urgence (17).

18. Procédé selon la revendication 17, ***caractérisé par*** l'ajustement de l'amplitude du courant alternatif généré au moyen de la fréquence d'excitation des convertisseurs de fréquence (3, 4).

19. Procédé selon la revendication 18, ***caractérisé par*** le réglage de la fréquence d'excitation des unités de convertisseur de fréquence (3, 4) via un potentiomètre d'une unité de commande (19) pour commander l'accélération et la décélération du véhicule qui est en connexion électrique avec le convertisseur de fréquence (3, 4).

20. Procédé selon l'une quelconque des revendications 17 à 19, ***caractérisé par*** la mesure en continu de la vitesse de rotation du moteur d'entraînement (1), et en outre en appliquant une limitation de couple basée sur la vitesse de rotation et les relevés de position du potentiomètre en réglant la fréquence d'excitation de le convertisseur de fréquence (3, 4).

21. Procédé selon la revendication 20, ***caractérisé par*** un changement de limitation de couple en continu en fonction de la vitesse de rotation et des relevés de position du potentiomètre.

22. Procédé selon l'une quelconque des revendications 17 à 21, ***caractérisé par*** la détermination de la différence entre les révolutions des roues directrices droite et gauche et le réglage de la vitesse de rotation des moteurs d'entraînement (1), qui sont attribués aux roues respectives, sur la base de la différence déterminée.

23. Procédé selon la revendication 22, ***caractérisé par*** la détection des révolutions des roues respectives par des émetteurs de signaux de position angulaire inductifs.

24. Procédé selon la revendication 23, ***caractérisé par*** le réglage du signal de sortie des émetteurs de signaux de position angulaire sur une position de départ lorsque le volant du véhicule est dans une position centrale neutre.

25. Procédé selon l'une quelconque des revendications 17 à 24, ***caractérisé par* le fait que** le moteur d'entraînement (1) est refroidi en fonction de sa température par un ventilateur de refroidissement (29) alimenté par une unité d'alimentation indépendante de l'unité d'alimentation en courant continu alimentant le moteur d'entraînement (1).

26. Procédé selon l'une quelconque des revendications 17 à 25, ***caractérisé par*** la connexion de l'alimentation en courant continu aux bornes du convertisseur de fréquence (3, 4) via un interrupteur sensible aux chocs affecté au véhicule.

27. Procédé selon l'une quelconque des revendications 17 à 26, ***caractérisé par*** la connexion de l'alimentation en courant continu aux bornes du convertisseur de fréquence (3, 4) via un thermorupteur appliqué en tant qu'unité de commutation (5).
